# EUROPEAN PATENT APPLICATION

(11) **EP 1 296 251 A1**
(43) Date of publication of application: **26.03.2003**
(21) Application number: 01122383.1
(22) Date of filing: 19.09.2001
(51) Int. Cl.: G06F 17/30

(54) **Document creation system**

(71) Applicant: Kreter, Martin, 76863 Herxheim (DE)
(72) Inventor: Philipp, Norman, 76829 Landau (DE)
(74) Representative: Harrison, Robert J., Ph. D.

(57) **Abstract**

A document creation system is disclosed which comprises in operation at least one data chain (50) for the storage of a plurality of state variables, at least one template storage (100) for the storage of plurality of templates, at least one data database (110) for the storage of a plurality of data, and an execution engine (40) for the creation of a document using the plurality of state variables, the plurality of views and the plurality of data. The execution engine (40) receives instructions from a client computer (10) and processes the instructions to select the ones of the plurality of state variables required for the creation of the document.

## Description

### Field of the Invention

The invention relates to a document creation system for the creation of documents that can be accessed by multiple users on a computer.

### Background of the Invention

Document generation systems are known in the art. For example, Microsoft's Front Page Editor or similar offerings by Adobe allow a relatively inexperienced user to generate his or her own documents - also called web pages - for uploading to the Internet where they can be viewed by users of the Internet. These programs generally create documents that use HTML tags that are interpretable by browsers on the user's machine. Details of the operation of such tags and their processing by a browser are known in the art.

Content Management Systems are also known in the art. These combine data from a database with view templates to create a document that is displayable by a browser present on a client computer. An example of such a system is described in PCT Patent Application WO-A-00/70511 (Wolfe et al) assigned to KCS Australia Pty. Ltd. of Ultimo, NSW, Australia.

German Patent Application DE-A-100 42 601 (Brooke et al.) assigned to Dell Products of Round Rock, Texas, USA, teaches both a method and a computer program for the generation of XML documents by use of a script language that extends the capability of the standard XML language. The computer program has both data and style sheets that are combined together by means of a script program to generate a final document.

PCT Patent Application WO-A-00/42528 (Onyeabor) teaches a web page development program which produces a document including executable code for display on a client computer. The client computer will request database objects from the server for display on the client computer.

There is still, however, a need for an improved document creation system. There is furthermore a need for a document creation system that allows non-experienced authors to rapidly design websites and these to be viewed by a user on a client computer. There is also a need for a document creation system which allows the simple and effective reuse and modification of website designs. There is also the need for a document creation system that allows the creation of documents that do not require executable code on the user's computer. There is also a need for a document generation system which allows rapid access to and generation of the documents which the user requests.

### Summary of the Invention

These and other needs are solved by the document creation system of the following invention.

The document creation system comprises in operation at least one data chain, at least one template storage, at least one database and at least one execution engine. The data chain is used for the storage of a plurality of state variables. As is explained in the description of the invention, the state variables have values that control the creation of the document. The template storage stores a plurality of templates that are used to create the views or the design of the document that the user wishes to access. The database is used for the storage the data that is to be displayed in the document. The execution engine creates the document using state variables to access the plurality of templates in the template storage and the plurality of data in the database.

The document creation system of the current application provides a system for the creation and editing of documents in a network. The system is easy to operate for non-experienced users since the separation of templates and data allows these to be edited without difficulty. The use of state variables to control the generation of the document ensures greater reliability and consistency of the documents generated. It furthermore allows the reuse or easy modification of existing documents to generate new documents. Since the code used for display of the document is generated only on a server, then there is less risk of viruses being passed to the client computer. If the execution engine generates code using only standard HTML tags, then the document is displayable by most Internet browsers. As a result, the author of a document does not have to worry about whether the user can, for example, display frames or the browser can process routines.

The execution engine in operation receives instructions from a client machine connected over a network to the execution engine running on a server. The execution engine processes the instructions, for example by interpreting an address inputted by the user, to select the ones of the plurality of state variables required for the creation of the document which the user wishes to access. The execution engine in operation processes the state variables to select the ones of the plurality of data and the ones of the plurality of templates required for the creation of the document.

The data chain has a plurality of data pages stored therein. Each one of the data pages stores at least one of the plurality of state variables. The data pages may have an inheritance relationship with each other in such a manner that the values of state variables are passed from a parent data page to one of its daughter data pages. This saves time in creating the document and reduces the amount of storage space required for the variables. Furthermore it provides a more "consistent" feel to the document.

In one advantageous embodiment of the invention, at least one of the plurality of templates is loanable to a client machine. The template can then be edited at the client machine and automatically returned to the template storage after editing. The edited template overwrites the original template.

The method for the creation of a document has the following steps:
a) a first step of retrieving state variables,
b) a second step of processing the state variables to determine which data and which templates are required to create the document,
c) a third step of retrieving the determined data and the determine templates, and
d) a fourth step of creating of the document from the determined data and the determined templates.

The state variables are retrieved by selecting one or more data pages from a data chain that is present in the memory of the document creation system. The data pages have the advantage that they can inherit the values of state variables from one another and thus reduce the time required to create the document.

The user of the system who wishes to view the document has the document provided to him or her in a fifth step by providing the document to a document reader.

The invention therefore provides for a computer system having in operation an interface for interaction with a client machine and a document creation system as described in this patent application.

Furthermore the invention has a client computer having in operation an interface for the interaction of a server computer on which is in operation a document system as described herein.

In yet another embodiment of the invention, the document creation system has a client computer with template retrieval software for interaction with the server computer to retrieve an editable template, and a template editor for editing the editable template and creating a revised template. The server computer has template delivery software for the supply of the editable template to the client computer and for the storage of the revised template. This allows revision of the templates to be carried out automatically.

The method for the editing of a template comprises:
a first step of the selection of an editable template to be edited from a template storage in the server,
a second step of loaning out the editable template to a client computer,
a third step of editing the editable template at the client computer to create a revised template,
a fourth step of supplying the revised template to the server, and
a fifth step of replacing the editable template with the revised template.

The invention is in operation when a computer program product is loaded onto a computer and a user can use the invention to create documents.

Protection of the invention is also sought for a computer program product which when loaded onto the computer operates the computer in such a manner that the document creation system is accessible by a user.

### Description of the Drawings

- Fig. 1: shows an overview of the invention.
- Fig. 2: shows a flow diagram of the document creation process.
- Fig. 3: shows an outline of page zero in the data chain.
- Fig. 4: shows an example of hierarchical data pages.
- Fig. 5: shows a flow diagram for the creation of a menu structure.
- Fig. 6: shows a flow diagram for the creation of a discussion forum.
- Fig. 7: shows a flow diagram for the creation of a guest book.
- Fig. 8: shows a flow diagram for the editing of a template.

### Detailed Description of the Invention

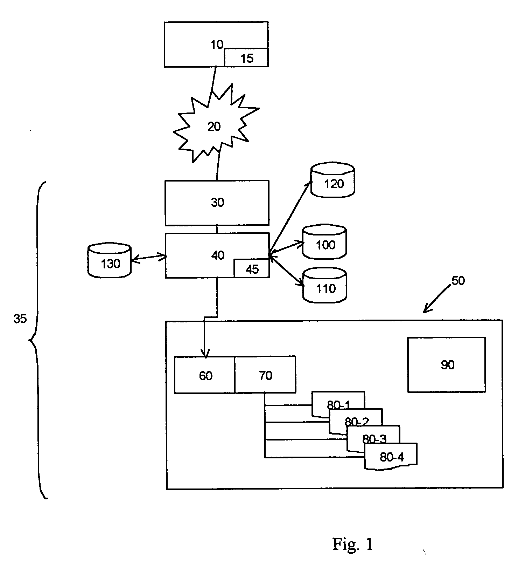

Fig. 1 shows an overview of the invention in which a client computer 10 is connected over a network 20 to an interface 30 on a server 35. The client computer 10 can be any computer which is connectable to the network 20 such as a computer containing an Intel Pentium processor, an Apple Macintosh or a Sun Solaris workstation. The client computer 10 runs a browser 15, which could be, for example, the Microsoft Internet Explorer or Netscape Navigator. The network 20 can be a local area network, a wide area network or the Internet. The server 35 can be any computer that can interface to the network 20 and serve multiple client computers 10. Such servers 35 are manufactured and sold by many companies including Dell computers, IBM, Hewlett-Packard or Sun Microsystems. The interface 30 is a program running on the server 35 that connects the server 35 to the network 20 and could be, for example, the Internet Interface Server from Microsoft.

When the server 35 is in operation part of it is configured to form an execution engine 40. The execution engine 40 accesses one or more memory storage areas. The memory storage areas may be created in real time in dynamic memory or may be present in static memory such as on hard discs or the like. The memory storage areas include a data chain 50, a template storage 100, a data database 110, a statistics database 120 and a graphics database 130. The function of the template storage 100 and the data database 110 will be described later. The data chain 50 includes a protocol file 60, a data page zero 70, multiple data pages 80-1, 80-2, 80-3, 80-4 (collectively numbered 80), and a database 90. The execution engine 40 also contains an offshore editor 45 whose function will be explained later.

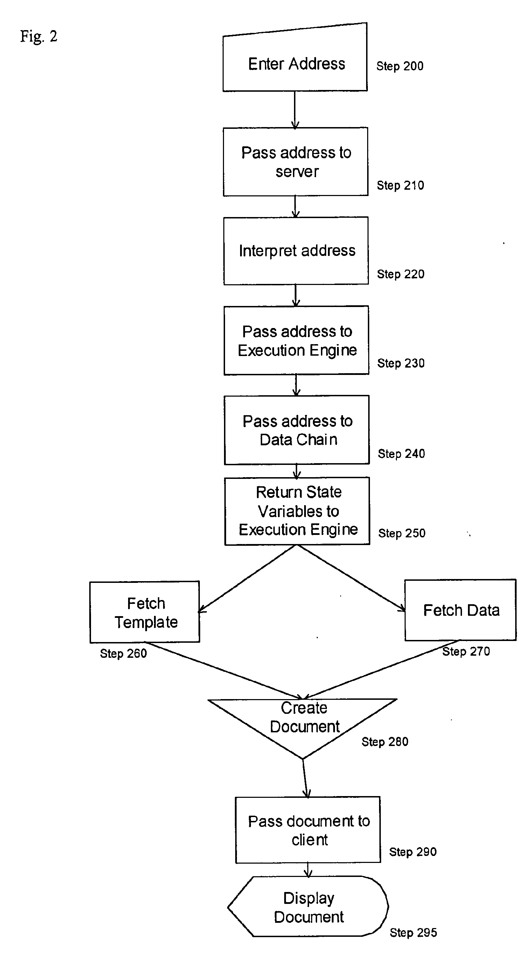

The invention for the creation of a document will now be described in operation by reference to Fig. 2. Let us suppose that a user sitting at the client computer 30 wishes to view a document. The document could be, for example, an Internet page. The user will open up the browser 15 on the client computer 10 and input an address (step 200) in the browser 15 for the document that the user wishes to view. The address that the user inputs to view the document is usually given in the form of a URL (Uniform Resource Locator) or an IP (Internet Protocol) address.

The address will be passed through the network 20 (step 210) from the client computer 10 to the server 35. The method in which an address is passed through the network is known in the art. The interface 30 will receive the address and interpret it in step 220. If the address indicates that the document to be viewed is available on the server 35, then the interface 30 will pass the address to the execution engine 40 in step 230. If the interface 30 is unable to interpret or does not recognise the address, then an error message will be sent back to the browser 15 on the client computer 10. The browser 15 can then chose to inform the user that the document is unavailable or search for the document elsewhere.

The execution engine 40 receives the address and decodes the address. The address will indicate one or more data pages 80-1, 80-2, 80-3 or 80-4 within the data chain 50. The execution engine 40 maps the address to one or more data pages 80 and then passes in step 240 a request to the data chain 50 to retrieve the mapped data pages, for example page 80-3, as well as the protocol 60 and the page zero 70. The execution engine 40 does this by generating a tag, for example a tag with the name <sitecontent> corresponding to the address. The tag is passed to the data chain 50 which can interpret the tag to retrieve the appropriate data pages 80.

The protocol 60 contains information about the program that is to be used to create the document to be viewed by the user. For example, if the user is using an Internet Explorer or Netscape Navigator browser, then the document should be created in HTML. The protocol will therefore contain the information that the document is to be created in HTML and any standard tags that need to be inserted such as the <body> tag. Alternatively the user may wish to view a document created in another mark-up language such as XML in which case the protocol 60 would contain those tags required to create an XML document.

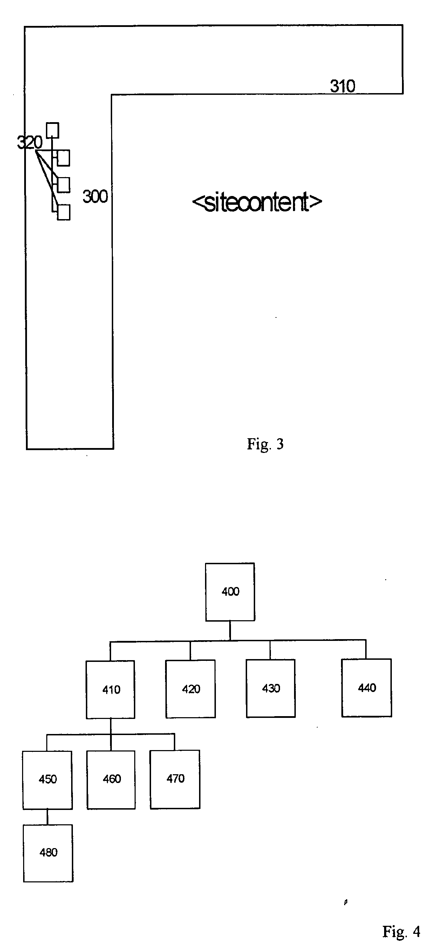

The page zero 70 contains the necessary information to generate a basic view that all documents with the data pages 80 in the data chain 50 possess. An example of such a view is shown in Fig. 3 in which a frame 310 surrounds the content of a document. The frame 310 has a menu 300 on the left hand side. The menu 300 contains a plurality of menu items 320. The content of the document is indicated by the <sitecontent> tag 320, which - as discussed above - is passed to the data chain 50 by the execution engine 40.

The data pages 80 contains state variables which indicate, for example, the background colour of the document, the font to be used in presenting information, the templates and the data to be used to generated the document, or security information relating to the document. Such security information includes information about the users who may access the document or parts of the document.

The data pages 80 may be arranged in a hierarchical form so that each of the data pages 80 inherits the state variables from a data page 80 higher in the hierarchy from which it depends. However, the state variables in a data page 80 in a lower part of the hierarchy can be overridden if and when necessary. Consider the hierarchy shown in Fig. 4 as an example. The main page 400 contains many of the state variables that are required to construct the document to be viewed by the user. Data pages 410, 420, 430 and 440 are daughter data pages of the main page 400 and inherit the values of the state variables in the main page 400. It is, however, possible to change the value of the state variables. The data pages 410, 420, 430 and 440 may also have further state variables as required for the content of the document. Data pages 450, 460 and 470 are daughter data pages of data page 410. As a result the data pages 450, 460 and 470 inherit the values of the state variables of the page 410 (and thus also the values of the data page 400). They do not, however, inherit the values of the state variables of the data pages 420, 430 and 440 since the data pages 450, 460 and 470 are not daughter data pages of these data pages. Similarly data page 480 is a daughter of the data page 450 and inherits the value of its state variables as well as those of the data pages 410 and 400.

The data chain 50 returns in step 250 to the execution engine 40 those data pages 80 which were requested. The data pages 80 are returned in sequence or in a chain in a given order that is dependent on the request issued by the user. The order in which the data pages 80 are returned will affect the content of the document to be generated. Thus, for example, the <sitecontent> tag might indicate that the content of the document is to be generated from the data pages 420, 430, 460 and 480 in that order. The values of the state variables in the data pages 420, 430, 460 and 480 will be passed back to the execution engine 40 in that order (step 250).

The execution engine 40 will use the value of the state variables to access and fetch in step 260 the templates stored in the template storage 110. The templates are used to generate the views required for the document. They can, for example, be fragments of an HTML document or tags used in another mark-up language. The execution engine 40 will also use the value of the state variables to decide which data from the data database 110 is needed in the document and in step 270 fetches the data from the database 110. The execution engine 40 combines the templates in step 280 with the data in order to generate code that can be interpreted by the browser in the client computer 10 to generate in step 280 the mark-up language for the document that the user has requested. In one embodiment of the invention, the document is generated in HTML code, which can be interpreted by most browsers. However, documents could be generated, for example, in XML format, Microsoft Word format, or other formats. The document is then passed in step 290 to the browser 15 for display to the user in step 295.

In order to increase the speed of access of the user to the document, then the execution engine 40 can access a graphics database 130, which is also present on the server 35. The graphics database 130 contains graphics data in a format interpretable by the browser 15 and passes the graphics data to the client computer 10 to allow generation of the document by the browser 15. It would, in principle, be possible to generate the graphics using templates in the template storage and data in the data database 110. This would, however, increase the amount of processing power required and/or reduce the speed of access. The graphics data can be saved in any graphics format such as TIFF or GIF formats

In a further refinement to the invention, a statistics database 120 is present in the server 35. The statistics database 120 monitors the addresses that are passed from the client computer 10 to the server 35 and the order in which they are passed. In its simplest form, the statistics database 120 monitors the address which the user accesses and the address which the user next accesses. A picture can therefore be built up of the most popular links between documents. Typically the addresses are stored in the form of URLs or IP addresses. Of course, lengthier links of addresses could also be stored. In a further refinement, the execution engine 40 can place cookies on the client machine 10 to obtain information about regular users.

Several examples of the method of generating a document will now be discussed in order to more clearly illustrate the operation of the invention.

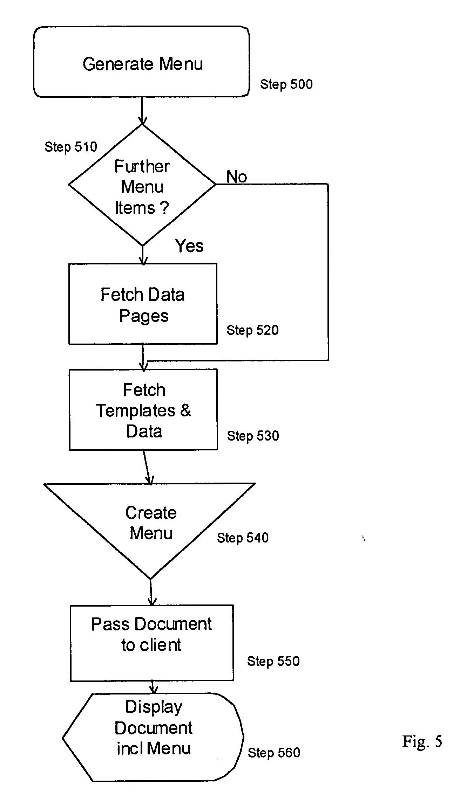

Returning to Fig. 3, it can be seen that the page zero 70 is formed from a menu 300 as well as a frame 310. The menu 300 can be generated using the invention as depicted in Fig. 5 and described below. The page zero 70 has a tag <LOOP_TYPE=MENU> which indicates that a menu 300 is to be formed using a loop as shown in steps 510 and 520. Each menu item 320 in the menu 300 is represented by a graphic (in this case a simple square) and thus the next tag will be of the form <MENU_ITEM_TYPE=GRAPHIC> followed by a list of data pages 80 in which the state variables relating to the various menu items 320 are to be found and passed to the execution engine 40 (step 520). So, for example, a tag <MENU_ITEM=440> could indicate that the state variables relating to one menu item 320 of the menu would be found in data page 440 of Fig. 4. Since data page 440 is a daughter data page of data page 400, then the state variables from the data page 400 will also be relevant to this menu item 320. It should be noted that the data page 440 does not contain the data or the template to generate the code required to generate the menu 300 on the client computer 10. The data pages 440 and 400 contain the state variables necessary to access the data from the database 110 and the templates from the template storage 100 (step 530).

When the loop is completed in step 510 - indicated by a tag of the form <ENDLOOP> all of the data pages required to generate the menu 300 on the client computer will have been passed to the execution engine 40 in the order in which the menu items 320 are to be generated in the document. The execution engine 40 has therefore all of the information required to access the data and templates (step 530) and to generate in step 540 the code to display the menu in the document. The document containing the menu is passed to the client computer 10 in step 550 and displayed in the browser 15 in step 560.

Suppose now that the menu 300 has submenus for at least some of the menu items 320. The user generates a request to display these submenus by issuing a new address, which is passed to the execution engine 40 as described above. The execution engine 40 will decode the address and request the additional data pages 80 from the data chain 50. The additional data pages 80 contain the state variables to generate the items of the submenu by going through the loops in steps 510 and 520. The additional data pages 80 will have the state variables to access the template from which the submenu is to be created and the state variables to indicate any data to be associated with the menu items 320 in the submenu, for example the name of the submenu item.

Creation of new menu items 320 is easily carried out using the invention. The user has to enter an editing mode and indicate which features he or she wishes to create. This can be easily done from a library of features provided on the server 35 or on the client computer 10 or can be done by "copy and paste" techniques. So, for example, the user may wish to create a new menu item. He could copy an existing menu item 320 and add it to the menu 300. The effect of this action would be to generate new data pages 80 in the data chain 50. Since many of the state variables are inheritable, this does not require much additional storage space in the data chain 50. The user will place the new menu item 320 in a certain position within the menu 300. The position will indicate in which order in the chain the new data pages 80 are to be fetched from the data chain 50 and processed by the execution engine 40.

The formatting of the new menu item 320 may change from the original menu item 320 from which the new menu item 320 is copied. The new data pages 80 relating to the new menu item 320 created may inherit different values of the state variables as they are in a different position in the data chain 50. So, for example, if the data page 80 copied to generate the new menu item 320 inherits the values of the state variables relating to the formatting from another data page 80, the values of the state variables will not necessarily be copied. Instead the values of the state variables relating to the formatting will be used which are inherited due to the position of the new data pages 80 in the data chain 50.

The user may wish to further change the wording of the menu item 320. This change is effected in the data stored in the database 110. The address at which this changed wording is stored will be given by one of the variables in the data page 80 relating to the menu item.

Similarly, creation of new submenus is facilitated because the user can copy the structure required and insert it into the required position in the menu 300. Data pages 80 relating to the position and structure of the submenu 320 will be generated. These data pages 80 inherit many of the state variables required to generate the submenu. The data pages 80 will be placed in the data chain in the position in which the submenu is to be accessed in the menu.

The inheritance features of the invention allow the overall structure and view of the menu 300 to be changed easily. Instead of changing the state variables in every data page 80, it is only necessary, for example, to change the state variables in the main page 400.

The management of a discussion forum is another example in which the document creation system of the invention can be use.

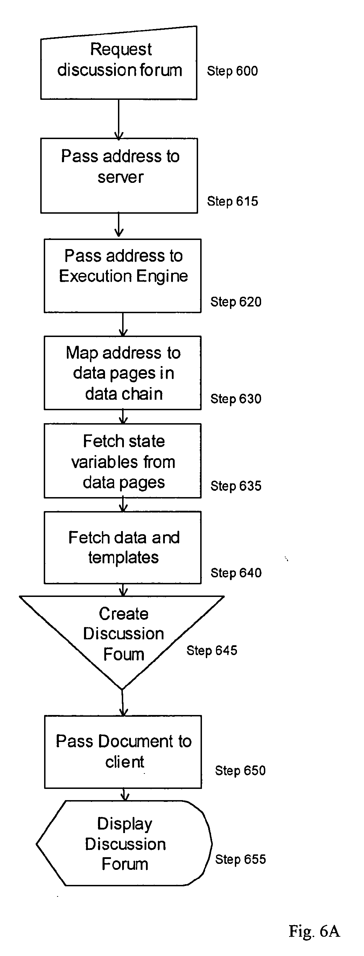

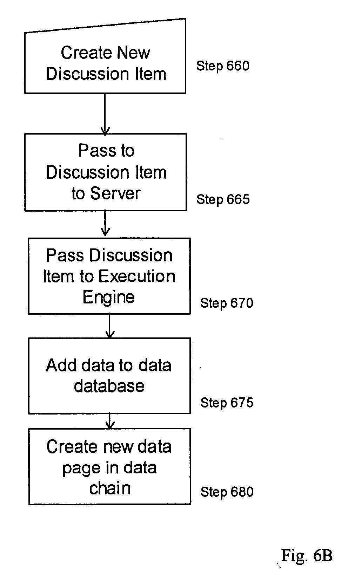

Suppose a user wishes to view a discussion forum and add his or her own contribution to the forum. The steps involved in this process are shown in Fig. 6. In the first step 600, the user requests access to the discussion forum. The browser 15 sends a request in step 615 to the server 35 that the user wishes to view the discussion forum. The execution engine 40 interprets the request (step 620) and maps the request for access to the discussion forum in step 630 to the data pages 80 within the data chain 50. The execution engine 40 subsequently fetches (step 635) the required state variables from the data pages 80. The data pages 80 are chained or linked together in the data chain 50 in the order in which the discussion forum is to be generated. Generally one data page 80 would relate to one contribution in the discussion forum. The text of the contribution is stored in the data database 110 and this is fetched by the execution engine 40 (step 640). Other items of data, such as a time stamp or the contributor's name, may also be stored in the data database 110. The template or templates required to display the discussion forum are fetched in step 640 from the template storage 100 and then a document representing the discussion forum is generated in the execution engine 40 (step 645) and passed (step 650) to the client computer 10 for display in step 655 in the browser 15.

Suppose that the user wants to add a contribution to the discussion forum (step 660). The user may wish to either respond to another contributor's views or may wish to start a new discussion thread. In both cases the user's new contribution will be passed back (step 665) to the server 35 together with, if required, the user's name and a time stamp and then to the execution engine 40 in step 670. These details will be stored in the data database 110 in step 675. A new data page 80 will be created in the data chain 50 (step 680). The new data page 80 will inherit many of the state variables of the existing contributions but will also have state variables with different values, such as a value representing the position at which the contribution is stored within the data database 110. The position of the new data page 80 within the data chain 50 depends on the type of contribution made. If the contribution is a response to another contributor's views, then the new data page 80 will be arranged dependently on the data page 80 with the state variables indicating the other contributor's views. If the contribution is a new discussion thread, then the new data page 80 will be added to the chained data pages 80 at the same hierarchical level as the beginning of all of the other discussion threads.

A news administration can be created in a similar manner. In this case the wording of the news items, together with other relevant data such as the name of the author, the creation date, the date after which the news item is no longer to be displayed, are found in the data database 110. The views in which the news items are to be displayed are in the template storage 100. The order of display of the news items is given by the chain of data pages 80 in the data chain 50. Creation of new news items is therefore simplified since news items are created by the creation of new data pages 80 in the appropriate position. The text is accessed in the data database 110. Editing the text is also simple. In this case, the data page may not need to be amended. Only the text is amended in the data database 110.

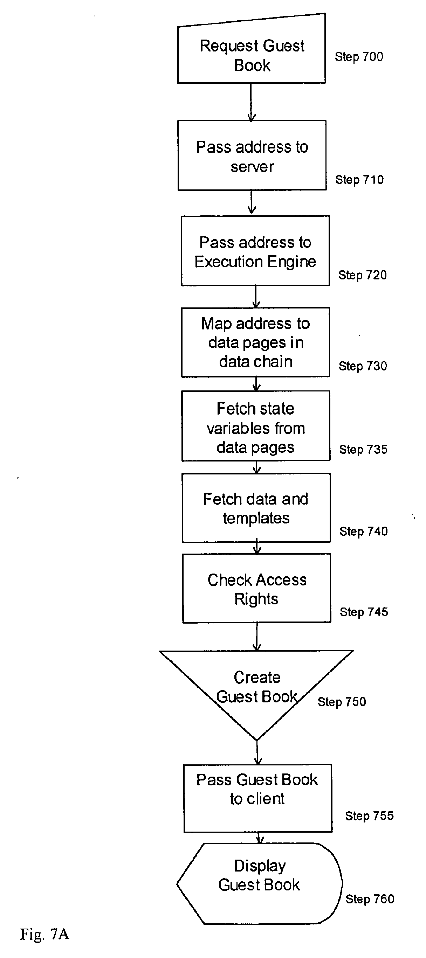

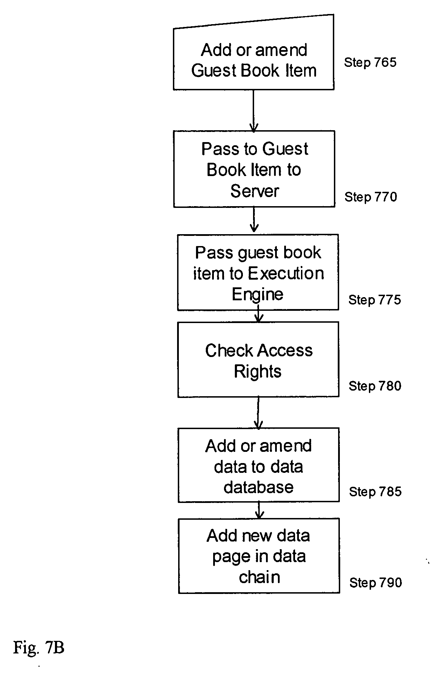

A further example of the use of the invention would be in the creation of guest books in which the user at the client computer 10 will provide information to the server 35. This could be, for example, an order for a product or a request for literature. The steps involved in this process are shown in Fig. 7. In the first step 700, the user requests the guest book. The browser 15 sends in step 710 a request to the server 35 that the user wishes to access the guest book. The execution engine 40 receives the address of the guest book in step 720 and maps (step 730) the request to the data pages 80 within the data chain 50 representing the guest book and fetches (step 735) the required state variables from the data pages 80. The data pages 80 are chained or linked together in the data chain in the order in which the information in the guest book is to be generated. The data pages 80 will also include the state variables indicating the access rights of the user to the guest book. For example, the user may only have access rights to amend entries in the guest book. Alternatively the user may be able to add completely new entries to the guest book or may only be able to view the guest book.

The text of the guest book is stored in the data database 110 and this is fetched by the execution engine 40 (step 740). Other items of data, such as product details or price, may also be stored in the data database. The template or templates required to display the guest are fetched in step 740 from the template storage 100. The access rights of the user are checked in step 745 and, if the user is allowed to access the guest book, a document representing the guest book is generated in the execution engine 40 (step 750) and passed in step 755 to the client computer 10 for display in the browser 15 (step 760).

Depending on the access rights that the user has been given for the guest book, the user can enter or amend the document in step 765 and return the document to the server 35 in step 770. The execution engine 40 will compare the returned document with the originally sent document and amend or add the data in the data database 110 if the user has the access rights to do so (steps 780 and 785). Finally any new or amended state variables are placed in data pages in the data chain 50 (step 795)

The ability to indicate the access rights for each data page 80 in the data chain 50 is an advantage since it provides for a stable and secure document generation system. The access rights may be assigned to certain roles. Administrators or Super-Users may be given the opportunity to change the data in the data database 110 or create new data pages and templates at will. Normal users will only have the opportunity of amending certain items of data.

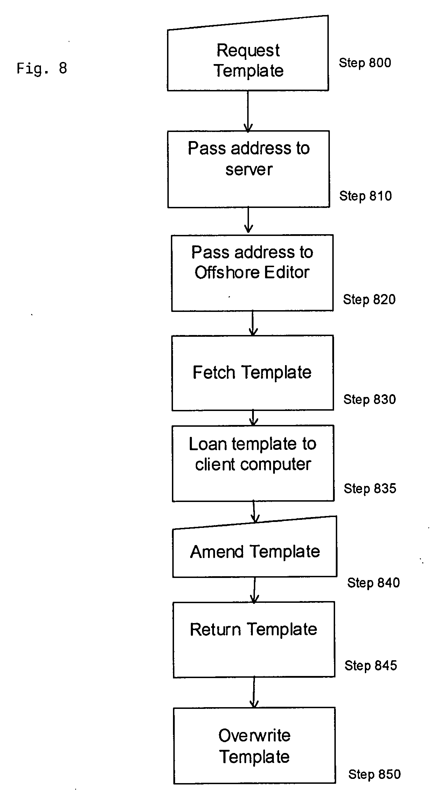

One further aspect of the invention is shown in Fig. 8 in which the amendment of templates is illustrated. Suppose a user whose role allows him or her to amend a template, then the template is requested in step 800 from the template storage 100 by a request sent in step 810 to the execution engine 40. This is passed in step 820 to a component within the execution engine 40 termed an offshore editor 45. The template is retrieved in step 830 from the template storage 100 and will be loaned in step 835 to the user by passing a copy of the template through the network 20 to the user at the client machine 10. A template editor - such a Microsoft Front Page or Adobe PhotoShop - will be automatically opened and the template amended by the user in step 840. On completion of the amendments, the amended template will be automatically sent back to the server 35 in step 845. The execution engine 40 will replace in step 850 the original (loaned) template in the template storage 100 with the amended template. Since this happens in real time without human intervention, another user will not notice the amendments taking place.

It will be appreciated by persons skilled in the art that numerous variations and/or modifications may be made to the invention as shown in the specific embodiments without departing from the spirit or scope of the invention as broadly described. The present embodiments are, therefore, to be considered as illustrative and not restrictive.

## Claims

1. Document creation system comprising in operation:
- at least one data chain (50) for the storage of a plurality of state variables,
- at least one template storage (100) for the storage of plurality of templates,
- at least one data database (110) for the storage of a plurality of data, and
- an execution engine (40) for the creation of a document using the plurality of state variables, the plurality of views and the plurality of data.

2. Document creation system of claim 1, wherein
the execution engine (40) in operation receives instructions from a client computer (10) and processes the instructions to select the ones of the plurality of state variables for the creation of the document.

3. Document creation system of claim 1 or claim 2, wherein
the execution engine (40) in operation processes the state variables to select the ones of the plurality of data and the ones of the plurality of templates for the creation of the document.

4. Document creation system according to any one of the above claims, wherein
the at least one data chain(50) has a plurality of data pages (80-1, 80-2, 80-3, 80-4) and each one of the data pages (80-1, 80-2, 80-3, 80-4) storing at least one of the plurality of state variables.

5. Document creation system according to claim 4, wherein
at least one of the data pages (80-1, 80-2, 80-3, 80-4) has an inheritance relationship with another one of the data pages (80-1, 80-2, 80-3, 80-4).

6. Document creation system according to any one of the above claims, wherein at least one of the plurality of templates is loanable with a client machine (10).

7. Computer program product comprising software for the document creation system of one of claims 1 to 6.

8. Method for the creation of a document having the following steps:
a) a first step of retrieving state variables,
b) a second step of processing the state variables to determine which data and which templates are required to create the document,
c) a third step of retrieving the determined data and the determine templates, and
d) a fourth step of creating of the document from the determined data and the determined templates.

9. Method according to claim 8 wherein the first step of retrieving the state variables comprises a step of selection of one or more sides from a data chain.

10. Method according to claim 8 or 9 further comprising after the fourth step a fifth step of providing the document to a document reader.

11. Computer system having in operation an interface for interaction with a client machine and a document creation system of at least one of the claims 1 to 6.

12. Client computer having in operation an interface for the interaction of a server computer (35) on which is in operation a document system of at least one of the claims 1 to 6.

13. Document creation system with a client computer (10) connectable to a server computer (35), wherein
the client computer (10) has template retrieval software (15) for interaction with the server computer (35) to retrieve an editable template, and a template editor for editing the editable template and creating a revised template; and
the server computer (35) has template delivery software (45) for the supply of the editable template to the client computer (10) and for the storage of the revised template.

14. Document creation system according to claim 13 wherein the editable template is stored in a template storage (100) and the revised template is written to the template storage (100) and replaces the editable template.

15. Method for the editing of a template comprising:
a first step of the selection of an editable template to be edited from a template storage in a first computer,
a second step of lending the editable template to a second computer,
a third step of editing the editable template at the second computer to create a revised template,
a fourth step of supplying the revised template to the first computer, and
a fifth step of replacing the editable template with the revised template.
